# EUROPÄISCHE PATENTANMELDUNG

(11) **EP 2 017 067 A1**
(43) Veröffentlichungstag der Anmeldung: **21.01.2009**
(21) Anmeldenummer: 08018184.5
(22) Anmeldetag: 02.06.2006
(51) Int. Cl.: B29D 22/00, B29C 65/00, B29C 65/56, B29C 70/20

(54) **Hohformteil**

(62) Teilanmeldung aus: 06011530.0
(71) Anmelder: ISE Automotive GmbH, 51702 Bergneustadt (DE)
(72) Erfinder: Müller, Hartwig, Dr., 09126 Chemnitz (DE)
(74) Vertreter: Grünecker, Kinkeldey, Stockmair & Schwanhäusser Anwaltssozietät

(57) **Zusammenfassung**

Ein Hohlformteil (1a) aus Fasern enthaltendem Kunststoff mit mindestens zwei Hohlkammern, zwischen denen wenigstens ein die Hohlkammern begrenzende Außenwandteile (2, 3) verbindender Steg vorgesehen ist, weist zwei jeweils einstückige und schalenförmige Pressformteile (16, 17) aus in einer Kunststoffmatrix Endlosfasern enthaltendem Faserverbundkunststoff (K) mit integrierten Stegteilbereichen (15a, 15b) auf, an den Stegteilbereichen (15a, 15b) integral geformte Formschlusselemente (18, 20, 28, 29), wobei in den Formschlusselementen in der Kunststoffmatrix aus den Stegteilbereichen in die Formschlusselemente verlagernde Endlosfasern enthalten sind, und sind die Pressformteile (16, 17) in einem zumindest weitgehend flächigen Fügebereich (F) formschlüssig derart gefügt, dass die Formschlusselemente in zumindest einer Richtung etwa parallel zum Fügebereich (F) verzahnend ineinander greifen.

## Beschreibung

Die Erfindung betrifft einen Hohlformteil gemäß Oberbegriff des Patentanspruchs 1.

Pressformteile aus Endlosfasern enthaltendem Faserverbundkunststoff gewinnen beispielsweise im Automobilbau zunehmende Bedeutung, weil solche Hohlformteile bei extrem geringem Gewicht hervorragende Festigkeit und Verformungseigenschaften erbringen. Bei der Herstellung werden sogenannte Prepregs in eine Pressform eingelegt, bereichsweise mehrlagig, die dann unter Temperatureinfluss plastifiziert und anschließend in die endgültige Form gepresst werden. Die Prepregs enthalten beispielsweise ein Endlosglasfaser-Gewebe mit Schuss- und Kettfäden und eine Imprägnierung mit thermoplastischem Kunststoff. Solche Pressformteile lassen sich zwar z.B. mit Sicken, Verstärkungen, oder dgl. belastungsorientiert einstückig gestalten, bisher jedoch nicht mit größeren Hohlkammem:

Es sind Überrollschutzkörper für Fahrzeug-Überrollschutzvorrichtungen bekannt, die jeweils aus zwei gefügten, schalenförmigen Pressformteilen aus Faserverbundkunststoff bestehen und somit zumindest eine Hohlkammer enthalten. Diese Hohlformteile sind relativ flach, d.h. ihre Stärke ist wesentlich geringer als die Breite und die Länge. Als Überrollschutzkörper wird der gefügte Hohlformteil bei einem Fahrzeugüberschlag vorwiegend in der X-Richtung des Fahrzeugkörpers (Richtung der Fahrzeuglängsachse) belastet, wobei es auf einen außerordentlich leistungsfähigen Schubverbund zwischen den schalenförmigen Presskörpem ankommt. Um die Schubverbundeigenschaften zu verbessern, werden die schalenförmigen Pressformteile entlang ihrer aneinanderliegenden Ränder und gegebenenfalls auch im Innenbereich durch mechanische Verbindungselemente gegeneinander gespannt oder aneinander geklebt (US 6 179 327 B1, Fig. 4). Die Schubverbundeigenschaften hängen dann aber u.a. vom Reibungskontakt und Verbund zwischen den schalenförmigen Pressformteilen ab; sind jedoch durch diese Fügetechnik begrenzt. Aus diesen Gründen werden die Pressformteile z.B. belastungsorientiert verstärkt, was sich im Gesamtgewicht niederschlägt.

Ferner ist eine Überrollschutzvorrichtung für einen Cabriolet-Fahrzeugkörper bekannt, die nach Art eines Targa-Bügels bogenförmig über der offenen Seite des Fahrzeugkörpers verläuft. Dieser Bügel ist aus mittels mechanischer Verbindungselemente gefügter Faserverbundkunststoff-Pressformteilen mit allgemein welligem Querschnitt gebildet, so dass über die Länge des Bügels durchlaufende kanalartige Hohlkammem gebildet sind. In die Hohlkammern können Verstärkungselemente eingesetzt sein, die bei der Formung der Pressformkörper als Formkeme dienen können.

Es sind zwar mit Fasern verstärkte Kunststoff-Hohlformteile bekannt, die durch Spritzgießen hergestellt werden. Mit Spritzgießen lassen sich jedoch nur Kunststoffe verarbeiten, die sehr kurze oder nur beschränkt lange Fasern enthalten. Deshalb ist materialbedingt das innere Kraftaufnahmeverhalten solcher Hohlformteile für hohe Anforderungen, z.B. im Automobilbau, nicht geeignet.

Aus US 5 506 018 A ist es bekannt, unter einem Winkel zueinander angeordnete Faserverbundkunststoff-Plattenstrukturen eines Gasturbinen-Abgassystems miteinander zu verbinden, und zwar nach einem Prinzip ähnlich der in der Holzfügetechnik üblichen Verzapfung. Der zunächst gerade Rand einer Platte wird durch eine spanende Bearbeitung mit Zähnen versehen, wobei auch in den Zähnen Verstärkungsfasern enthalten sind. Dann wird die andere, etwa orthogonal zur ersten verlaufende Plattenstruktur aus Faserlagen und einer Kunststoffmatrix um die Zähne geschichtet, wobei die Zähne zumindest eine Faserlage durchdringen. Dieses Zwischenprodukt wird dann unter Einwirkung von Temperatur und Druck so ausgeformt, dass sich Fasern der Zähne und Fasern der Faserlagen verschlingen.

Der Erfindung liegt die Aufgabe zugrunde, einen Hohlformteil anzugeben, der einen hochwertigen inneren Schubverbund und dadurch eine verbesserte Kraftaufnahme erbringt, so dass im Außenbereich weniger Verbundkunststoff erforderlich ist und sich insgesamt Gewicht einsparen lässt. Die Ausbildung des Hohlformteiles soll gezielt auf die gegenüber denen des Spritzgießens deutlich unterschiedlichen Möglichkeiten beim Pressen plastifizierter, Endlosfasern enthaltender Prepregs abgestimmt sein.

Durch die Verzahnung der Formschlusselemente zwischen den Stegteilbereichen wird ein sehr hochwertiger innerer Schubverbund speziell bei in etwas senkrecht auf die Außenwandteile gerichteten Belastungen erzielt, so dass sich für hohen Anforderungen gerechtwerdende Belastungsfälle Material und damit Gewicht einsparen lässt. Dabei wird bei der Ausbildung der Formschlusselemente die Möglichkeit genutzt, die sich beim Arbeiten mit Prepregs beim Pressen im plastifizierten Zustand gerade noch realisieren lassen, und zwar z.B. im Hinblick auf die Verlagerung von Endlosfasern in die Formschlusselemente hinein.

Bei einer zweckmäßigen Ausführungsform des aus zwei schalenförmigen Pressformteilen gefügten Hohlformteils sind auch in den Randbereichen miteinander verzahnte Formschlusselemente vorgesehen, um den Schubverbund auch in diesen Bereichen zu verbessern.

In einer zweckmäßigen Ausführungsform sind die Formschlusselemente in etwa senkrecht zum Fügebereich ineinandergesteckt. Dabei können, vorzugsweise, die Formschlusselemente Vertiefungen und in die Vertiefungen eingepasste Vorsprünge sein. Die zwischen den Außenwandteilen wirkenden Kräfte werden an vielen einzelnen Stellen und großflächig und in unterschiedlichen Richtungen über den Schubverbund abgetragen.

Bei einer anderen Ausführungsform des aus zwei schalenförmigen Pressformteilen gefügten Hohlformteils sind die Formschlusselemente in etwa parallel zum Fügebereich ineinandergesteckt. In genau dieser Richtung ist zwar der Schubverbund dann weniger hochwertig, hingegen in allen anderen Richtungen, und im Wesentlichen parallel zum Fügebereich, jedoch sehr hochwertig. Da die Formschlusselemente auch die Außenwandteile aneinander festlegen, lassen sich mechanische Verbindungselemente weitestgehend einsparen. Zweckmäßig sind schwalbenschwanzartige Vertiefungen und in diese Vertiefungen passende Hakvorsprünge, weil diese Gestaltung beim Arbeiten mit Prepregs und beim Pressen der plastifizierten Prepregs problemlos beherrschbar ist. Die Richtung, in der die Formschlusselemente ineinandergesteckt werden, wird im Hinblick auf zu erwartende Belastungsfälle so gewählt, dass der schwächere Schubverbund keinen Nachteil erzeugt.

Zweckmäßig sind im letztgenannten Fall in den Vertiefungen und/oder an den Einhakvorsprüngen Endanschläge zur Begrenzung der Einstecktiefe geformt. Es erfolgt eine exakte Positionierung der beiden Pressformteile relativ zueinander, und lassen sich mechanische Verbindungselemente einsparen. Falls überhaupt die Fügung durch Verbindungselemente unterstützt werden muss, bietet sich Kleben oder bieten sich andere, in dieser Technik üblich mechanische Verbindungselemente an, deren Anzahl dann jedoch gering sein kann.

Zweckmäßig ist jeder Pressformteil mit den integral geformten Formschlusselementen aus Endlos-Glasfasergewebe aufweisenden, mit Kunststoff, wie Polypropylen imprägnierten Prepregs hergestellt, die in unterschiedlichsten Spezifikationen handelsüblich sind. Für besonders hochwertige Einsatzfälle ist es jedoch auch denkbar, noch hochwertigeres Endlosfasermaterial zu verwenden, wie Kohlefasern oder Aramid, oder dgl.. Polypropylen als der thermoplastische Kunststoff zum Ausbilden der Kunststoffmatrix, in der die Endlosfasern im fertigen Produkt verankert sind, zeigt besonders günstige Eigenschaften im Hinblick beispielsweise auf die Rückverformung oder dgl..

Der jeweilige Hohlformteil ist zweckmäßig ein Überrollschutzkörper für eine Fahrzeug-Überrollschutzvorrichtung, der sich durch einen sehr hochwertigen inneren Schubverbund speziell bei Belastungen in etwa senkrecht auf die Außenwandteile auszeichnet. Allerdings ist die Verwendung solcher Hohlformteile nicht auf dieses Einsatzgebiet beschränkt, sondern es sind auch andere Einsatzfälle denkbar, bei denen es auf eine sehr hohen Anforderungen entsprechende Kraftaufnahme unter Belastungen ankommt.

Anhand der Zeichnungen werden Ausführungsformen des Erfindungsgegenstandes erläutert. Es zeigen:
- Fig. 1: perspektivisch zwei schalenförmige Pressformteile aus Faserverbundkunststoff zur Erstellung eines Hohlformteils,
- Fig. 2 und 3: zwei zueinander gehörende, andere Pressformteile aus Faserverbundkunststoff zur Erstellung eines Hohlformteils,
- Fig. 4 und 5: Ansichten der Pressformteile der Fig. 4 und 5 in Blickrichtung von links, und
- Fig. 6: den aus den Pressformteilen erstellten Hohlformteil in der gleichen Blickrichtung wie in den Fig. 4 und 5.

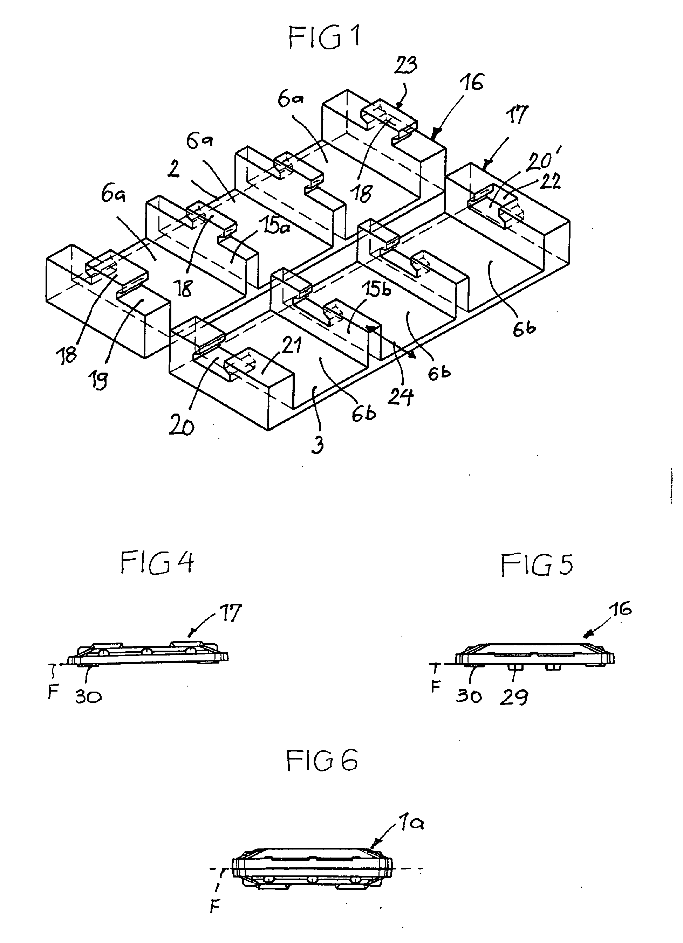

Gemäß Fig. 1 lässt sich ein Hohlformteil (ähnlich dem Hohlformteil 1a in Fig. 6) aus zwei schalenförmigen Pressformteilen 16, 17 aus Faserverbundkunststoff fügen. Die beiden Pressformteile 16, 17 werden zunächst speziell gefügt, und gegebenenfalls durch Kleben oder nicht gezeigte mechanische Verbindungselemente aneinander fixiert.

An Außenwandteilen 2, 3 sind Stegteilbereiche 15a bzw. 15b integral angeformt, die zueinander passende Fügeflächen 19, 21 definieren und zueinander passende Formschlusselemente 18, 20 aufweisen. Im Pressformteil 16 sind die Formschlusselemente Einhakvorsprünge mit T-förmigem Querschnitt, die in Längsrichtung des Pressformteils 16 aufeinander ausgerichtet sind. Zwischen den Stegteilbereichen 15a sind Hohlkammer-Teilbereiche 6a gebildet. Der in Fig. 1 ganz rechts am Pressformteil 16 gezeigte Vorsprung 18 besitzt eine stirnseitige Anschlagfläche 23.

Der zum Pressformteil 16 passende andere Pressformteil 17 besitzt ebenfalls integral mit Formschlusselementen 20 angeformte Stegteilbereiche 15b, zwischen denen Hohlkammer-Teilbereiche 6b gebildet sind. Die Formschlusselemente 20 des Pressformteils 17 sind schwalbenschwanzartige Vertiefungen, in die beim Fügen der beiden Pressformteile 16, 17 zum Hohlformteil die Vorsprünge 18 einander verzahnend eingeschoben oder eingesteckt werden, bis die Anschlagfläche 23 an einer Anschlagfläche 22 der in Fig. 1 im Pressformteil 17 ganz rechts gezeigten Vertiefung (Formschlusselement 20') anliegt. Die Pressformteile 16, 17 sind einstückig aus Faserverbundkunststoff hergestellt, wobei in der Figur nicht gezeigte Endlosfasern in den Stegteilbereichen 15a, 15b, in den Formschlusselementen 18, 20, 20' und in den Außenwandteilen 2, 3 enthalten sind.

Der aus den Pressformteilen 16, 17 erstellbare Hohlformteil leistet einen hochwertigen Schubverbund hauptsächlich in Richtung des Doppelpfeiles 24.

Jeder Pressformteil 16, 17 wird aus Endlosfasern 14, 14a enthaltendem Faserverbundkunststoff K in einer Pressform hergestellt, die beispielsweise einen Formhohlraum definierende Pressform-Hälften aufweist. Das Verfahren erfolgt unter Anwendung von Druck und Temperatur, wobei der Faserverbundkunststoff K aus in die Pressform W eingelegten, z.B. flächigen und biegsamen Prepregs entsteht, die beispielsweise ein Endlos-Glasfasergewebe aus Schuss- und Kettfäden und eine Kunststoffimprägnierung, z.B. mit thermoplastischem Propylen, aufweisen. Die Prepregs sind gegebenenfalls in mehreren Lagen und mit einem Volumen eingelegt, mit welchem der Formhohlraum nach dem Plastifizieren des Kunststoffes und Verlagern der Endlosfasern vollständig ausgefüllt wird.

Der so einstückig hergestellte Pressformteil 16, 17 aus dem Faserverbundkunststoff K und besitzt Außenwandteile 2, 3, die annähernd zueinander parallel und beabstandet sind, und gegebenenfalls die Außenwandteile 2, 3 miteinander verbindende Randbereiche 4, 5. Die Hohlkammer-Teilbereiche 6a, 6b und die Stegteilbereiche 15a, 15b werden z.B. durch in die Pressform eingelegte oder einen Teil davon bildenden Kerne gebildet.

Die Hohlformteile sind zweckmäßig Überrollschutzkörper für Automobil-Überrollschutzvorrichtungen, die im Automobil entweder stationär oder ausfahrbar montiert werden, wobei die Hohlkammern gegebenenfalls zum Unterbringen funktionsnotwendiger Einrichtungen nutzbar sind.

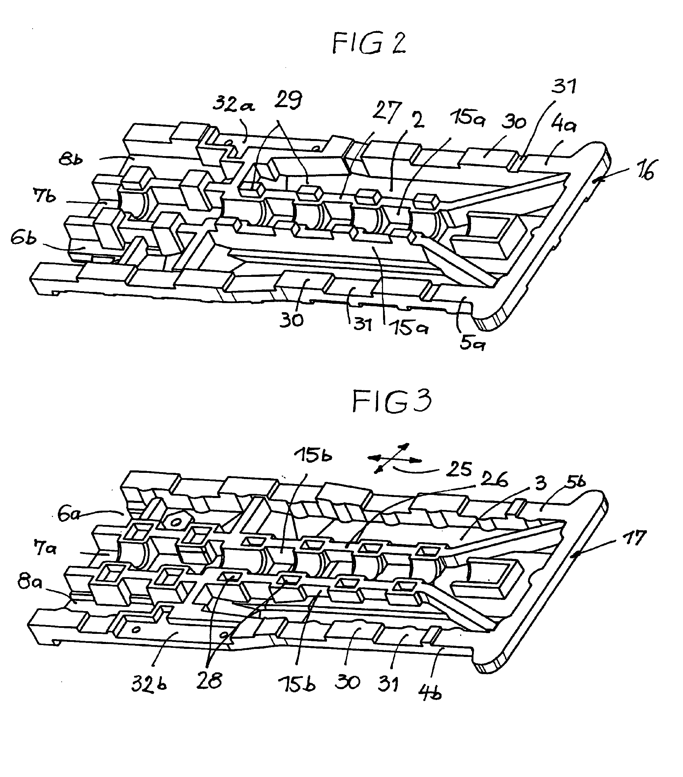

In den Fig. 2 und 3 sind zwei zueinanderpassende einstückige Pressformteile 16, 17 aus Faserverbundkunststoff gezeigt, aus denen sich ein Hohlformteil 1a gemäß Fig. 6 erstellen lässt, der in einem im Wesentlichen flächigen Fügebereich F gefügt ist.

Der Pressformteil 16 in Fig. 2 weist angrenzend an den Außenwandteil 2 Stegteilbereiche 15a und erhabene Randbereiche 4a, 5a auf, zwischen denen Hohlkammer-Teilbereiche 6b, 7b, 8b gebildet sind, in etwa analog zu Fig. 1. An den Stegteilbereichen 15a, die integral mit dem Außenwandteil 2 geformt sind, sind integral Formschlusselemente 29 in Form blockförmiger vortretender Vorsprünge angeformt, und zwar in Zwischenabständen verteilt über die Länge der Stegteilbereiche 15a. Auch in den Randbereichen 4a, 5a sind zweckmäßig Formschlusselemente 30, 31 in Form blockförmiger Vorsprünge und blockförmiger Vertiefungen integral geformt, wobei Endlosfasern in dem Faserverbundkunststoff auch in die Formschlusselemente 29, 30, 31 verlagert sind. Zusätzlich ist randseitig eine Aussparung 32a eingeformt, die beispielsweise zum späteren Montieren einer Rastschiene dienen kann.

Der dazu passende andere Pressformteil 17 von Fig. 3 weist als Formschlusselemente 28 zu den Vorsprüngen passende, eingeformte Vertiefungen in den Stegteilbereichen 15b des Außenwandteils 3 auf. Ferner sind in den Randbereichen 5b, 4b Formschlusselemente 30, 31 in Form von blockartigen Vorsprüngen und blockartigen Vertiefungen geformt und gegebenenfalls eine Aussparung 32b analog zur Aussparung 32a im Pressformteil 16.

Die Fig. 4 und 5 zeigen die beiden Pressformteile 16, 17 von Fig. 2 und 3 jeweils in einer Ansicht in der Richtung des Fügebereichs F und von der in Fig. 2 bzw. 3 rechts liegenden Stirnseite, wobei Formschlusselemente 29 und/oder 30 über den Fügebereich F vorspringen.

Die beiden Pressformteile 16, 17 der Fig. 2 - 5 werden nach der Herstellung in unterschiedlichen Pressformen so im Fügebereich F zum fertigen Hohlformteil 1a gefügt, wie dies in Fig. 6 angedeutet ist. Der Hohlformteil 1a kann ein Überrollschutzkörper für eine Automobil-Überrollschutz-vorrichtung sein, der an der gezeigten Stirnseite und entlang der Randbereiche 4b, 5b geschlossen, hingegen am in Fig. 6 in der Zeichnungsebene liegende Ende zu den durch die Hohlkammer-Teilbereiche 6a, 6b, 7a, 7b, 8a, 8b gebildeten Hohlkammern offen ist. In dem Hohlformteil 1a können zweckmäßig mechanische Verbindungselemente montiert werden, z.B. Spannschrauben oder Nieten z. B. in den Randbereichen 4b, 5b, oder es können die beiden Pressformteile 16, 17 durch Kleben miteinander stoffschlüssig verbunden werden. Im Hohlformteil 1 a wird ein hochwertiger innerer Schubverbund zum Abtragen von Kräften beispielsweise in zwei orthogonalen, durch Doppelpfeile 25 angedeuteten Richtungen erzielt.

## Patentansprüche

1. Hohlformteil (1a) aus Fasern enthaltendem Kunststoff, mit mindestens zwei Hohlkammern, zwischen denen wenigstens ein die Hohlkammern begrenzende Außenwandteile (2, 3) verbindender Steg vorgesehen ist, **dadurch gekennzeichnet, dass** der Hohlformteil (1a) zwei jeweils einstückige und schalenförmige Pressformteile (16, 17) aus in einer Kunststoffmatrix Endlosfasern enthaltendem Faserverbundkunststoff mit integrierten Stegteilbereichen (15a 15b) aufweist, dass an den Stegteilbereichen (15a, 15b) integral Formschlusselemente (18, 20, 20', 28, 29, 30, 31) geformt sind, dass in den Formschlusselementen in der Kunststoffmatrix aus den Stegteilbereichen in die Formschlusselemente verlagerte Endlosfasern enthalten sind, und dass die Pressformteile (16, 17) in einem zumindest weitgehend flächigen Fügebereich (F) formschlüssig derart gefügt sind, dass die Formschlusselemente in zumindest einer Richtung etwa parallel zum Fügebereich (F) verzahnend ineinandergreifen.

2. Hohlformteil nach Anspruch 1, **dadurch gekennzeichnet, dass** die Pressformteile (16, 17) in die Hohlkammern dem Steg (15) abgewandt begrenzenden Randbereichen (4a, 4b, 5a, 5b) mit integral geformten, Endlosfasern enthaltenden Formschlusselementen (30, 31) versehen sind, die in zumindest einer Richtung im Wesentlichen parallel zum Fügebereich (F) verzahnend ineinandergreifen.

3. Hohlformteil nach Anspruch 1, **dadurch gekennzeichnet, dass** die Formschlusselemente (29, 28; 30, 31) in etwa senkrecht zum Fügebereich (F) ineinandergesteckt sind, und, vorzugsweise, als Vertiefungen und in die Vertiefungen eingepasste Vorsprünge ausgebildet sind.

4. Hohlformteil nach Anspruch 1, **dadurch gekennzeichnet, dass** die Formschlusselemente (18, 20) in etwa parallel zum Fügebereich (F) ineinandergesteckt und, vorzugsweise, als schwalbenschwanzartige Vertiefungen und in die Vertiefungen passende Einhakvorsprünge ausgebildet sind.

5. Hohlformteil nach Anspruch 4, **dadurch gekennzeichnet, dass** in den Vertiefungen und/oder an den Einhakvorsprüngen Endanschläge (22, 23) zur Begrenzung der relativen Einstecktiefe geformt sind.

6. Hohlformteil nach Anspruch 1, **dadurch gekennzeichnet, dass** die zwei Pressformteile (16, 17) zusätzlich durch Kleben oder durch mechanische Verbindungselemente miteinander verbunden sind.
